# FASCICULE DE BREVET EUROPEEN

(11) **EP 0 802 645 B1**
(45) Date de publication et mention de la délivrance du brevet: **20.09.2000**
(21) Numéro de dépôt: 97400841.9
(22) Date de dépôt: 14.04.1997
(51) Int. Cl.: H04J 14/02, H04B 10/17

(54) **Amplificateur optique à gain variable et à bande passante constante, et système de compensation automatique des variations des pertes dans une liaison optique, comportant un tel amplificateur**
Optischer Verstärker mit variabler Verstärkung und konstantem Durchlassband und automatisches Verluständerungenkompensationssystem in einer optischen Verbindung mit einem solchen Verstärker
Variable gain and constant passband optical amplifier and automatic loss variation compensation system in an optical link incorporating such an amplifier

(30) Priorité: 15.04.1996 FR 9604668
(43) Date de publication de la demande: 22.10.1997
(73) Titulaire: ALCATEL, 75008 Paris (FR)
(72) Inventeur: Bayart, Dominique, 92140 Clamart (FR)
(74) Mandataire: Sciaux, Edmond

(56) Documents cités:
- EP-A- 0 655 632
- IEEE PHOTONICS TECHNOLOGY LETTERS, vol. 6, no. 11, 1 Novembre 1994, pages 1321-1323, XP000486188 ESKILDSEN L ET AL: "SELF-REGULATING WDM AMPLIFIER MODULE FOR SCALABLE LIGHTWAVE NETWORKS"
- PATENT ABSTRACTS OF JAPAN vol. 018, no. 284 (P-1745), 30 Mai 1994 & JP 06 051355 A (NEC CORP), 25 Février 1994,
- JOURNAL OF LIGHTWAVE TECHNOLOGY, vol. 11, no. 5/06, 1 Mai 1993, pages 667-676, XP000396700 HILL G R ET AL: "A TRANSPORT NETWORK LAYER BASED ON OPTICAL NETWORK ELEMENTS"

## Description

L'invention concerne le domaine des liaisons optiques à grande distance, et plus particulièrement celles qui transmettent plusieurs signaux optiques multiplexés spectralement. Pour compenser les pertes causées par la distance, une telle liaison est découpée en plusieurs tronçons et un amplificateur optique est intercalé entre deux tronçons successifs pour compenser ces pertes. La transmission de plusieurs signaux optiques multiplexés spectralement nécessite d'utiliser des amplificateurs ayant une bande passante relativement large et plate pour offrir un même gain à tous les signaux optiques, quelle que soit la longueur d'onde de leur porteuse.

Lorsqu'il s'agit d'un amplificateur à fibre dopée, les variations du gain en fonction de la longueur d'onde, pour une longueur de fibre donnée, sont minimales pour une certaine valeur de son gain moyen. Pour minimiser les variations du gain en fonction de la longueur d'onde, afin de transmettre le plus grand nombre possible de signaux optiques multiplexés spectralement, on est conduit à choisir la valeur du gain moyen correspondant à la bande passante maximale pour une excursion de gain fixée. Cette valeur optimale du gain moyen dépend uniquement de la longueur de la fibre dopée, et des pertes de transmission des composants de l'amplificateur, pour un type de fibre donné. La puissance de la pompe est donc choisie telle que le gain moyen ait cette valeur optimale. La valeur du gain moyen doit rester constante pour conserver cette optimisation de la bande passante. On utilise donc des amplificateurs dont le gain moyen est régulé individuellement par un asservissement. Une liaison à grande distance est découpée en tronçons dont la longueur provoque des pertes nominales telles qu'elles sont exactement compensées par un amplificateur ainsi optimisé.

Dans une liaison à grande distance, les pertes peuvent varier accidentellement, c'est à dire augmenter par rapport à leur valeur nominale, même si les amplificateurs restent en parfait état de marche, et avec un gain individuel parfaitement stabilisé. Ces variations des pertes peuvent être dues à des variations des caractéristiques des tronçons de fibre optique, ou des raccordements entre ces tronçons de fibre optique. Il est alors souhaitable de disposer d'au moins un amplificateur optique à gain variable pour compenser les variations des pertes dans cette liaison. Mais on ne peut pas faire varier le gain d'un amplificateur classique à fibre optique sans renoncer à l'optimisation de la courbe de réponse dans la bande passante.

Une solution à ce problème consiste à associer un amplificateur à gain fixé, surévalué par rapport aux pertes nominales, suivi d'un atténuateur optique. L'amplificateur comporte alors une fibre dopée ayant une longueur supérieure à la longueur correspondant au gain optimal, et une pompe optique dont la puissance est elle aussi supérieure à la puissance correspondant au gain optimal. Comme la puissance d'une diode laser de pompage peut difficilement être augmentée de plus de 3 dB par rapport aux valeurs habituelles, la variation maximale des pertes compensables, exprimée en décibels, est limitée elle aussi à 3 dB.

On peut utiliser aussi des amplificateurs optiques à semi-conducteurs, pour compenser les pertes d'une liaison à grande distance. Le gain moyen d'un tel amplificateur est régulé pour qu'il ne fluctue pas en fonction des signaux optiques transmis. Il est régulé généralement en faisant fonctionner l'amplificateur en régime laser. Ce procédé de régulation ne permet pas de faire varier le gain moyen pour compenser une augmentation des pertes de la liaison.

Une autre solution est décrite dans : SELF-REGULATING WDM AMPLIFIER MODULE FOR SCALABLE LIGHTWAVE NETWORKS, par Goldstein et Al, dans OPTICAL AMPLIFIERS AND THEIR APPLICATIONS, TECHNICAL DIGEST, Series Volume 14, August 3-5, 1994, BRECKENRIDGE COLORADO. Ce document décrit un amplificateur pour un multiplex spectral, permettant d'amplifier séparément chacune des porteuses, et donc éliminant le problème du maintien d'une bande passante large et ayant une courbe de réponse plate. Pour amplifier un multiplex optique comportant m porteuses, il comporte :
- un démultiplexeur optique à m sorties et une entrée,
- un multiplexeur optique à m entrées et une sortie,
- et m amplificateurs optiques comportant chacun une fibre dopée indépendante , et comportant une pompe optique commune.

La sortie du démultiplexeur correspondant à une longueur d'onde donnée est reliée, par un amplificateur indépendant, à l'entrée correspondant à la même longueur d'onde donnée du multiplexeur. Les m amplificateurs ont le même gain, respectivement pour chacune des m longueurs d'onde, afin d'assurer la même amplification à toutes les porteuses. Si on veut faire varier le gain commun de ces amplificateurs, il est possible d'agir sur la puissance de la pompe optique commune à ces amplificateurs sans que la bande passante de l'ensemble soit modifiée. Les variations de la bande passante individuelle de chacun de ces amplificateurs importe peu, puisque chaque amplificateur n'a à amplifier qu'une seule porteuse. Ce dispositif connu présente l'inconvénient de nécessiter un nombre d'amplificateurs optiques, un nombre d'entrées de multiplexeur, et un nombre de sorties de démultiplexeur croissant avec le nombre m des porteuses optiques constituant le multiplex optique à amplifier. D'autre part, les pertes optiques crées par le multiplexeur et le démultiplexeur sont importantes.

Le but de l'invention est de proposer une autre solution dont la complexité n'augmente pas proportionnellement au nombre de porteuses du multiplex optique.

L'objet de l'invention est un amplificateur optique à gain variable, et ayant une bande passante donnée, son gain étant réglé par un signal de commande de gain pouvant prendre m valeurs discrètes ; caractérisé en ce qu'il comporte :
- m amplificateurs optiques ayant chacun un gain fixé et différent des gains de autres amplificateurs, et ayant une excursion de gain, en fonction de la longueur d'onde, au plus égale à une valeur commune, dans la bande donnée ;
- des premiers moyens de commutation ayant : une entrée couplée à l'entrée de l'amplificateur à gain variable, m sorties couplées respectivement aux entrées des m amplificateurs à gain fixé, et une entrée de commande recevant le signal de commande de gain ;
- et des seconds moyens de commutation optique ayant m entrées couplées respectivement aux sorties des m amplificateurs à gains fixés, une sortie couplée à la sortie de l'amplificateur à gain variable, et une entrée de commande recevant le signal de commande de gain.

L'amplificateur ainsi caractérisé présente une bande passante qui peut être optimisée respectivement pour chaque valeur de gain, puisqu'il comporte m amplificateurs fonctionnant indépendamment les uns des autres.

Selon un premier mode de réalisation préférentiel, les premiers moyens de commutation comportent un commutateur optique reliant leur entrée à une seule de leurs sorties, cette sortie étant déterminée par le signal de commande de gain.

Selon un second mode de réalisation préférentiel, les premiers moyens de commutation comportent :
- un coupleur en étoile couplant l'entrée de l'amplificateur à gain variable à des entrées de tous les amplificateurs à gains fixés simultanément;
- et des moyens pour alimenter en énergie un seul des amplificateurs à gains fixés, cet amplificateur étant sélectionné en fonction du signal de commande de gain.

Un autre objet de l'invention est un système de compensation automatique des variations des pertes dans une liaison optique, caractérisé en ce qu'il comporte un amplificateur à gain variable selon l'une des revendications 1 à 9, commandé par des moyens de mesure relative des pertes dans cette liaison, ces derniers moyens fournissant un signal utilisé comme signal de commande de gain.

L'invention sera mieux comprise et d'autres caractéristiques apparaîtront à l'aide de la description cidessous et des figures l'accompagnant :
- la figure 1 représente le spectre du signal de sortie, S, d'un exemple de liaison optique à grande distance ;
- la figure 2 représente le schéma synoptique d'un premier exemple d'application de l'amplificateur selon l'invention ;
- la figure 3 représente le schéma synoptique d'un second exemple d'application de l'amplificateur selon l'invention ;
- la figure 4 représente le schéma synoptique d'une première variante de l'amplificateur selon l'invention ;
- la figure 5 représente le schéma synoptique d'un premier exemple de réalisation de la première variante de l'amplificateur selon l'invention ;
- la figure 6 représente le schéma synoptique d'un second exemple de réalisation de de la première variante de l'amplificateur selon l'invention ;
- la figure 7 représente le schéma synoptique d'une seconde variante de l'amplificateur selon l'invention ;
- la figure 8 représente le schéma synoptique d'un exemple de réalisation de l'amplificateur selon la seconde variante.

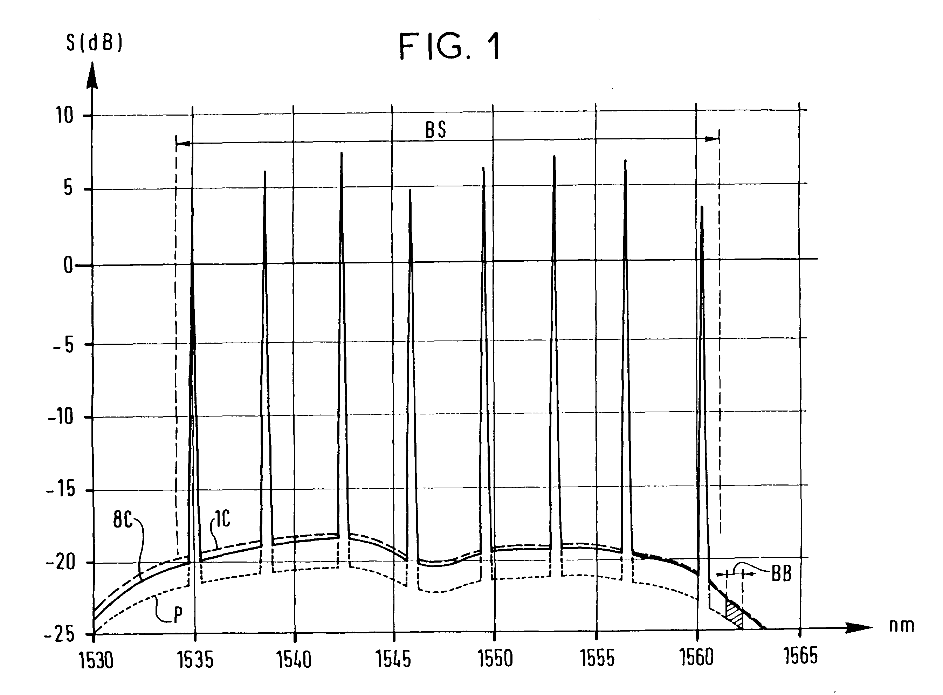

La figure 1 représente le spectre du signal S fourni par la sortie d'une liaison optique à grande distance comportant une pluralité d'amplificateurs optiques à gain fixé. Dans cet exemple, la liaison est susceptible de transmettre jusqu'à huit signaux optiques portés respectivement par huit porteuses réparties dans la bande BS, appelée bande de signal, s'étendant de 1535 nm à 1560 nm.

Le spectre 8C représenté en trait continu est obtenu lorsque 8 signaux sont retransmis simultanément. Le spectre 1C représenté en pointillés est obtenu lorsque la liaison ne transmet qu'un seul signal optique, porté par exemple par la porteuse de longueur d'onde 1535 nm. Dans ce dernier cas, le pic correspondant à 1535 nm est pratiquement confondu avec celui observé dans le cas précédent car le gain des amplificateurs est régulé pour être indépendant du nombre des signaux optiques. Le spectre du bruit transmis par la liaison est observable en dehors des pics. Son spectre à la forme de la bande passante de la liaison, c'est-à-dire une forme en cloche dont le sommet, relativement plat, correspond à la bande du signal utile BS car la courbe de réponse des amplificateurs placés tout au long de la liaison est optimisée pour être à peu près plate dans la bande BS, et décroît évidemment à l'extérieur de cette bande.

Un autre spectre, P, représenté en pointillés, est obtenu dans le cas de la transmission de huit signaux optiques, mais avec une perte de 5 dB provoquée par une panne dans la liaison, par exemple une défaillance mécanique à la jonction entre deux tronçons de fibre. Le spectre P est pratiquement identique au spectre 8C, sauf qu'il est plus faible de 5 dB. Ceci s'explique par le fait que les amplificateurs situés le long de la liaison ont un gain fixé, stabilisé par un dispositif d'asservissement. Ces amplificateurs compensent seulement les pertes nominales de la liaison, mais ne peuvent pas réagir pour compenser une perte supplémentaire accidentelle.

Comme le montre la figure 1, le bruit transmis par la liaison est pratiquement inchangé quand le nombre de signaux optiques varie, du fait de la régulation du gain des amplificateurs. Par contre, son spectre est plus faible de 5 dB quand les pertes de la liaison augmentent accidentellement de 5 dB. Une mesure du bruit va donc permettre de mesurer, de manière relative, une variation des pertes de la liaison. Elle consiste à filtrer le signal S fourni par la liaison pour extraire un signal de bruit situé dans une bande spectrale BB, entre 1561 et 1562 nm, c'est-à-dire hors de la bande BS ; et mesurer la puissance moyenne du signal de bruit dans cette bande BB. Toute variation de cette puissance moyenne par rapport à une valeur nominale, donne la valeur relative des pertes accidentelles dans la liaison. Il est alors possible de compenser ces pertes accidentelles au moyen d'un amplificateur optique à gain variable et à bande passante constante.

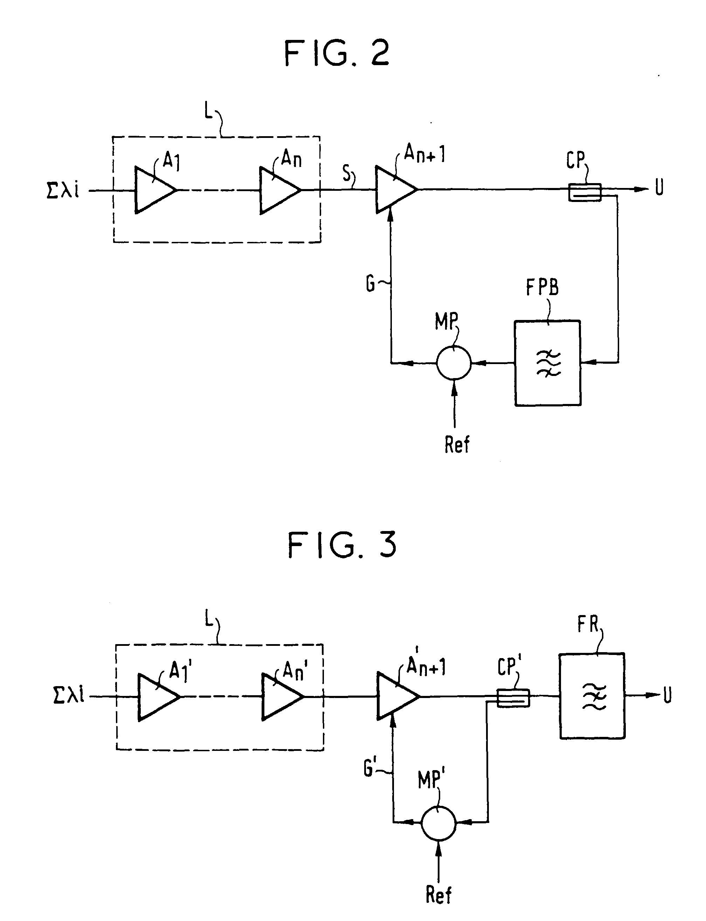

La figure 2 représente le schéma synoptique d'un premier exemple d'application de l'amplificateur selon l'invention, pour compenser les pertes accidentelles d'une liaison L à grande distance. Un amplificateur optique Aₙ₊₁ à gain réglable et à bande passante constante permet de compenser une augmentation des pertes dans cette liaison L. Cette liaison L comporte n amplificateurs A₁, ... ,Aₙ, à gain fixé, transmettant une pluralité de signaux optiques multiplexés spectralement, référencés Σλi. L'amplificateur Aₙ₊₁ a : une entrée reliée à la sortie S de la liaison L, et une sortie couplée à un dispositif U utilisateur des signaux optiques utiles, par l'intermédiaire d'un coupleur optique CP.

Le coupleur CP prélève une fraction des signaux optiques fournis par la sortie de l'amplificateur Aₙ₊₁ et la fournit à l'entrée d'un filtre passe-bande FPB, dont la bande passante constitue la bande de mesure de bruit BB qui est située hors de la bande BS des signaux utiles. La sortie du filtre FPB est reliée à une entrée d'un dispositif MP pour mesurer la puissance moyenne du signal de bruit fourni par le filtre. Le dispositif MP soustrait cette puissance moyenne à une valeur de référence Ref correspondant aux pertes nominales de la liaison L, et fournit un signal de moyenne et la valeur nominale Ref. Le signal de commande fourni par la sortie du dispositif MP est appliqué à une entrée de commande de gain de l'amplificateur Aₙ₊₁, pour régler son gain de façon à réduire la différence entre la puissance moyenne de bruit et la valeur nominale Ref.

La figure 3 représente le schéma synoptique d'un second exemple d'application de l'amplificateur selon l'invention. Les éléments analogues portent les mêmes références que sur la figure 2 avec l'attribut prime. Dans cet exemple, le filtre utilisé est un filtre FR réjecteur de bande, et plus précisément réfléchissant vers son entrée les signaux qu'il rejette. La bande rejetée est en l'occurrence la bande BB de mesure de bruit. Un coupleur CP' et le filtre FR sont intercalés dans cet ordre, entre la sortie de l'amplificateur A'ₙ₊₁ et un dispositif utilisateur U. Un accès du coupleur CP' extrait une fraction du signal réfléchi par le filtre FR et l'applique à une entrée d'un dispositif MP' qui mesure la puissance moyenne du signal de bruit, la soustraie à une valeur nominale Ref', et fournit un signal de commande de gain pour l'amplificateur A'ₙ₊₁.

Selon un mode de réalisation préférentiel, le filtre FR comporte un réseau de Bragg gravé sur une fibre optique.

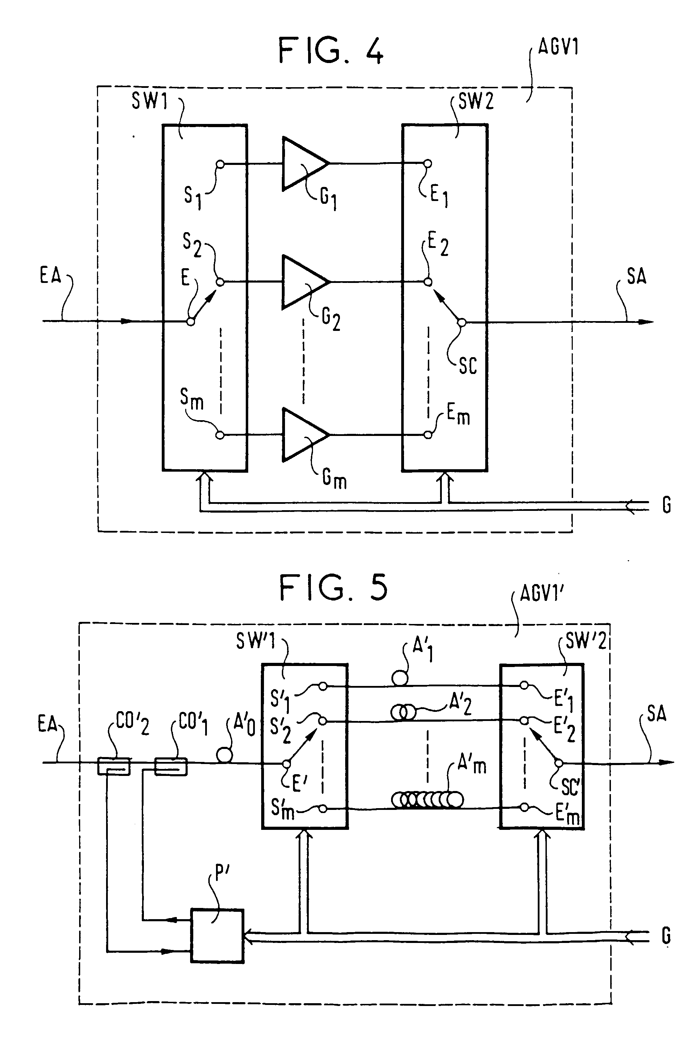

La figure 4 représente le schéma synoptique d'une première variante de l'amplificateur selon l'invention. Cet variante, référencée AVG1, comporte :
- une entrée EA recevant un multiplex optique comportant une pluralité de porteuses ;
- une entrée de commande recevant un mot binaire G représentant le gain souhaité ;
- une sortie SA restituant le multiplex optique amplifié ;
- un premier commutateur optique SW1 ayant : une entrée E reliée à l'entrée EA de l'amplificateur à gain variable AVG1 ; m sorties S₁, S₂,..., Sₘ; et une entrée de commande recevant le mot binaire G ;
- un second commutateur optique SW2, ayant : une sortie SC reliée à la sortie SA de l'amplificateur à gain variable AVG1 ; m entrées E₁, E₂,..., Eₘ; et une entrée de commande recevant le mot binaire G ;
- m amplificateurs G₁, G₂,..., Gₘ, ayant chacun un gain fixé et différent des gains des autres amplificateurs, et ayant une excursion de gain, en fonction de la longueur d'onde, au plus égale à une valeur commune donnée, dans la bande de transmission des signaux optiques ; chaque amplificateur G₁, G₂,..., Gₘ ayant une entrée reliée à une sortie du premier commutateur SW1 et ayant une sortie reliée à une entrée du second commutateur SW2.

Les amplificateurs G₁, G₂, .., Gₘ relient ainsi respectivement les sorties S₁, S₂,..., Sₘ aux entrées E₁, E₂,..., Eₘ. La structure du commutateur SW1 est telle que les sorties S₁, S₂,..., Sₘ sont reliées respectivement à l'entrée E lorsque le mot binaire G prend respectivement les valeurs 1,2,3,..., m. De même, la structure du commutateur SW2 est telle que les entrées E₁, E₂,..., Eₘ sont reliées respectivement à la sortie SC lorsque le mot binaire G prend respectivement les valeurs 1,2,..., m. Ainsi, lorsque la valeur du mot binaire G est égale à un nombre entier i compris entre 1 et m, le multiplex optique est amplifié par l'amplificateur Gi, avec le gain fixé correspondant à cet amplificateur, et avec la même bande passante quel que soit l'amplificateur sélectionné.

Les amplificateurs G₁,...,Gₘ peuvent être des amplificateurs à fibre dopée ou à semi-conducteurs.

La figure 5 représente le schéma synoptique d'un premier exemple de réalisation AVG1' de la première variante de l'amplificateur selon l'invention. Cet exemple comporte :
- un premier commutateur SW'₁ et un second commutateur SW'₂ identiques aux commutateurs SW1 et SW2 respectivement ;
- m tronçons de fibre optique dopée, A'₁, A'₂,..., A'ₘ reliant respectivement les sorties du commutateur SW'₁ aux entrées du commutateur SW'₂ ;
- un tronçon de fibre optique A'₀ ayant une extrémité reliée à l'entrée E' du commutateur SW'₁;
- un coupleur optique CO'₁ ayant un accès relié à l'autre extrémité du tronçon de fibre optique dopée A'₀, un deuxième accès, et un troisième accès ;
- un dispositif de pompage optique P' ayant : une sortie fournissant de l'énergie de pompage au deuxième accès du coupleur CO'₁, une première entrée de commande recevant le mot binaire G de commande de gain, et une seconde entrée de commande ;
- un coupleur optique CO'₂ ayant : un accès relié au troisième accès du coupleur CO'₁ ; un accès relié à la seconde entrée de commande du générateur P' pour lui fournir une fraction de la puissance de l'émission spontanée amplifiée par l'amplificateur à gain variable AVG1' ; et un accès constituant l'entrée EA de l'amplificateur à gain variable AVG1' .

Le tronçon de fibre A'₀ constitue un préamplificateur placé en amont de la batterie d'amplificateurs constituée des tronçons de fibre A'₁, A'₂,...,A'ₘ. Il assure un gain égal à environ la moitié du gain maximal de l'amplificateur AVG1'. Le gain de ce préamplificateur A'₀ permet d'éviter que les pertes d'insertion du commutateur SW'₁ aient une influence sur le facteur de bruit de l'amplificateur AVG1'.

Le coupleur CO'₁ permet d'appliquer, de manière codirectionnelle, l'énergie de pompage à la fois au tronçon de fibre A₀, et à celui des tronçons de fibre A'₁, A'₂,...., A'ₘ qui est en service à l'instant considéré.

Le coupleur CO'₂ permet d'asservir le gain de l'amplificateur AVG1', selon le procédé décrit dans la demande de brevet français n° 2.714.982, pour qu'il ait exactement la valeur représentée par le mot binaire G.

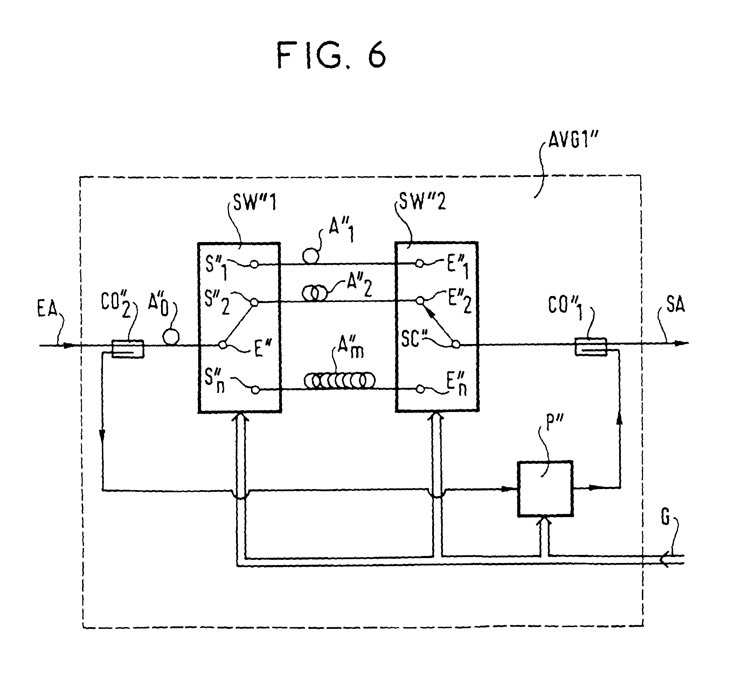

La figure 6 représente le schéma synoptique d'un second exemple de réalisation AVG1" de la première variante de l'amplificateur selon l'invention. Cet exemple comporte :
- un premier commutateur SW"₁ et un second commutateur SW"₂ identiques aux commutateurs SW'₁ et SW'₂ respectivement ;
- m tronçons de fibre optique dopée, A"₁, A"₂, ..., A"ₘ reliant respectivement les sorties du commutateur SW"₁ aux entrées du commutateur SW"₂ ;
- un tronçon de fibre optique A"₀ ayant une première extrémité reliée à l'entrée E" du commutateur SW"₁ ;
- un premier coupleur optique CO"₁ ayant un accès relié à la sortie SC" du second commutateur SW"₂, un deuxième accès constituant la sortie SA" de l'amplificateur à gain variable AVG1", et un troisième accès ;
- un dispositif de pompage optique P" ayant : une sortie fournissant de l'énergie de pompage au troisième accès du coupleur CO"₁, une première entrée de commande recevant le mot binaire G de commande de gain, et une seconde entrée de commande ;
- un second coupleur optique CO"₂ ayant : un accès relié à la seconde extrémité du tronçon de fibre A"₀ ; un accès relié à la seconde entrée de commande du générateur P' pour lui fournir une fraction de la puissance de l'émission spontanée amplifiée par l'amplificateur à gain variable AVG1" ; et un accès constituant l'entrée EA de l'amplificateur à gain variable AVG1" .

Le tronçon de fibre A"₀ constitue un préamplificateur placé en amont de la batterie d'amplificateurs constituée des tronçons de fibre A"₁, A"₂,..., A"ₘ. Il assure un gain égal à environ la moitié du gain maximal de l'amplificateur AVG1". Le gain de ce préamplificateur A"₀ permet d'éviter que les pertes d'insertion du commutateur SW"₁ aient une influence sur le facteur de bruit de l'amplificateur AVG1".

Le coupleur CO"₁ permet d'appliquer de manière contradirectionnelle, l'énergie de pompage à la fois au tronçon de fibre A"₀ et à celui des tronçons de fibre A"₁, A"₂,..., A"ₘ qui est en service à l'instant considéré.

Le coupleur CO"₂ permet d'asservir le gain de l'amplificateur AVG1", selon le procédé décrit dans la demande de brevet français n° 2.714.982, pour qu'il ait exactement la valeur représentée par le mot binaire G.

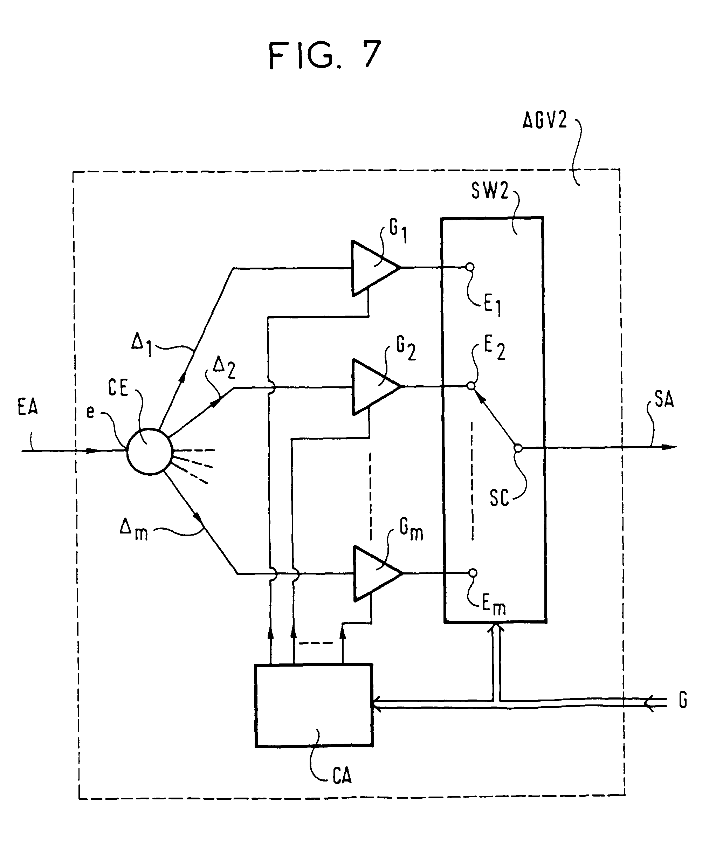

La figure 7 représente le schéma synoptique d'une seconde variante AGV2 de l'amplificateur selon l'invention. Cette variante diffère de la première par le fait que le commutateur SW1 est remplacé par :
- un coupleur en étoile, CE, ayant un accès e constituant l'entrée EA de l'amplificateur AGV2, et m accès s₁,...,sₘ reliés respectivement aux entrées des m amplificateurs G₁,..., Gₘ ;
- et un dipositif CA commandant l'alimentation en énergie, pour les amplificateurs G₁,...,Gₘ , en fonction du mot G de commande de gain, de telle sorte que l'amplificateur Gᵢ est le seul à fonctionner lorsque le mot G a la valeur i.

Les amplificateurs G₁,...,Gₘ peuvent être à fibre dopée ou à semi-conducteurs. Lorsqu'il s'agit d'amplificateurs à semi-conducteurs ils sont activés ou désactivés respectivement en fournissant ou en coupant leur alimentation électrique.

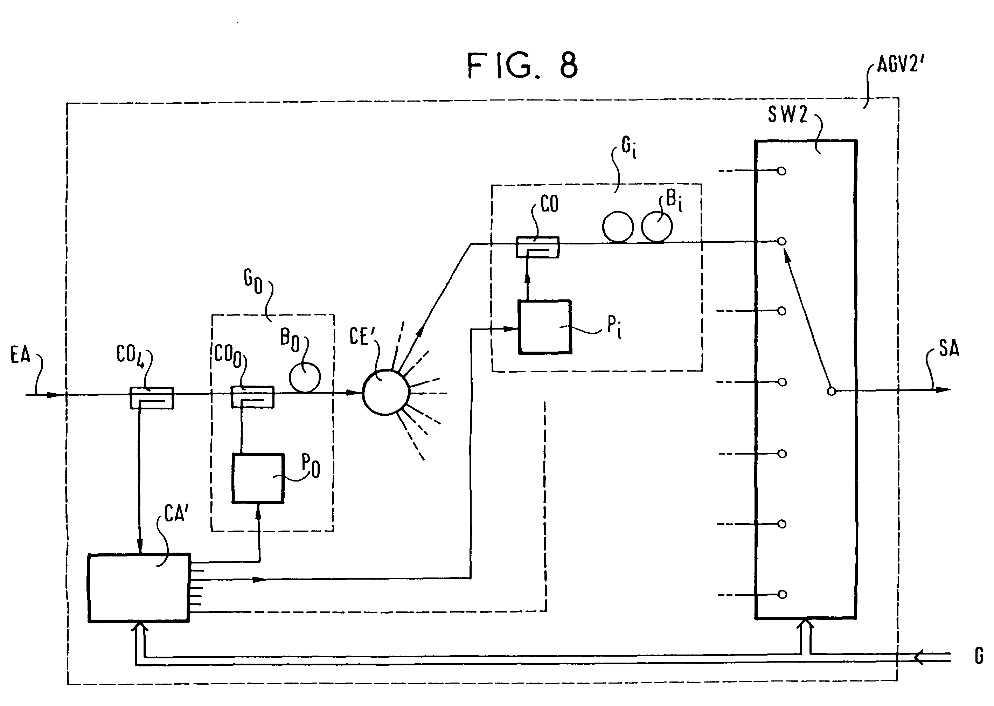

La figure 8 représente le schéma synoptique d'un exemple de réalisation AGV2' de la seconde variante de l'amplificateur selon l'invention. Il comporte :
- m amplificateurs G₁,...,Gₘ, à fibre dopée, ayant chacun un gain fixé différent du gain des autres ; seul l'amplificateur Gᵢ étant représenté, à titre d'exemple ;
- un commutateur SW₂ identique à celui décrit précédemment ;
- un coupleur en étoile, CE', ayant m+1 accès parmi lesquels m sont reliés respectivement à des entrées des m amplificateurs G₁,...,Gₘ ;
- un préamplificateur G₀ ayant une sortie reliée à un accès du coupleur en étoile CE ;
- un coupleur CO₄ ayant un accès constituant l'entrée EA de l'amplificateur AGV2' et un accès relié à une entrée du préamplificateur G₀ ;
- et un circuit de commande d'alimentation, CA', ayant : une entrée de commande recevant le mot binaire G de commande de gain ; une entrée reliée à un accès du coupleur CO₄ qui lui fournit une fraction de l'énergie d'émission spontanée amplifiée dans l'amplificateur AGV2' ; et m+1 sorties reliées respectivement à des entrées de commande du préamplificateur G₀ et des amplificateurs G₁,...,Gₘ.

A titre d'exemple l'amplificateur Gᵢ comporte :
- un tronçon de fibre dopée, Bᵢ, dont la longueur est différente pour chacun des amplificateurs G₁,...,Gₘ, et dont une première extrémité constitue la sortie de l'amplificateur Gᵢ;
- un coupleur COᵢ pour injecter une onde de pompage dans le tronçon de fibre Bᵢ, ayant : un accès constituant l'entrée de l'amplificateur Gᵢ, et un accès relié à la seconde extrémité du tronçon de fibre Bᵢ ;
- et une pompe optique Pᵢ ayant une sortie reliée à un accès du coupleur COᵢ, et une entrée de commande constituant l'entrée de commande de l'amplificateur Gi.

Le préamplicateur G₀ a une structure analogue : un tronçon de fibre B₀, une pompe optique P₀, et un coupleur C₀.

Le circuit CA' active un seul amplificateur sélectionné parmi G₁,..., Gₘ selon la valeur du mot binaire G , qui est comprise entre 1 et m. Il sélectionne l'amplificateur Gᵢ lorsque cette valeur est i. Il active en permanence le préamplificateur G₀. Il asservit le gain de l'ensemble G₀-Gᵢ en comparant la puissance de l'émission spontanée amplifiée à une valeur de consigne qui peut être différente pour les différentes valeurs du mot G de commande de gain.

La portée de l'invention n'est pas limitée aux exemples de réalisation décrits ci-dessus. Le pompage des fibres amplificatrices peut être soit codirectionnel, soit contradirectionnel, soit les deux à la fois.

## Revendications

1. Amplificateur optique à gain variable (AGV1 ; AGV2), ayant une bande passante donnée, son gain étant réglé par un signal (G) de commande de gain pouvant prendre m valeurs discrètes ; caractérisé en ce qu'il comporte :
- m amplificateurs optiques (G₁,... ,Gₘ) ayant chacun un gain fixé et différent des gains de autres amplificateurs, et ayant une excursion de gain, en fonction de la longueur d'onde, au plus égale à une valeur commune, dans la bande donnée ;
- des premiers moyens de commutation (SW1 ; CE, CA) ayant : une entrée (E ; e) couplée à l'entrée (EA) de l'amplificateur à gain variable (AGV1 ; AGV2), m sorties (S₁,..., Sₘ ; s₁,...,sₘ) couplées respectivement aux entrées des m amplificateurs (G₁,..., Gₘ) à gain fixé, et une entrée de commande recevant le signal (G) de commande de gain ;
- et des seconds moyens de commutation optique (SW2) ayant m entrées (E₁,...,Eₘ) couplées respectivement aux sorties des m amplificateurs (G₁,...,Gₘ) à gains fixés, une sortie (SC) couplée à la sortie (SA) de l'amplificateur à gain variable (AVG1), et une entrée de commande recevant le signal (G) de commande de gain.

2. Amplificateur selon la revendication 1, caractérisé en ce que les premiers moyens de commutation comportent un commutateur optique (SW₁) reliant leur entrée (E) à une seule de leurs sorties (S₁,..., Sₘ), cette sortie étant déterminée par le signal de commande de gain (G).

3. Amplificateur selon la revendication 1, caractérisé en ce que les premiers moyens de commutation comportent :
- un coupleur en étoile (CE) couplant l'entrée de l'amplificateur à gain variable à des entrées de tous les amplificateurs à gains fixés (G₁,...,Gₘ) simultanément;
- et des moyens (CA) pour alimenter en énergie un seul des amplificateurs (G₁,...,Gₘ) à gains fixés, cet amplificateur étant sélectionné en fonction du signal de commande de gain (G).

4. Amplificateur selon la revendication 2, caractérisé en ce que chaque amplificateur (G₁,..., Gₘ) à gain fixé comporte :
- une fibre dopée (respectivement A'₁,..., A'ₘ) ayant une longueur distincte, et reliant une entrée des seconds moyens de commutation (SW'₂) à une sortie des premiers moyens de commutation (SW'₁) ;
- un générateur (P') d'onde de pompage, commun à tous les amplificateurs à gains fixés, ayant une première entrée de commande recevant le signal (G) de commande de gain, et une sortie fournissant une onde de pompage ayant une longueur d'onde constante mais une puissance différente selon le signal (G) de commande de gain ;
- un premier coupleur (CO'₁) ayant : un accès relié à une sortie du générateur (P'), un accès couplé à l'entrée (EA') de l'amplificateur à gain variable (AVG1'), et un accès couplé à l'entrée (E') des premiers moyens de commutation (SW1') .

5. Amplificateur selon la revendication 4, caractérisé en ce qu'il comporte en outre un second coupleur (CO'₂) ayant : un accès relié à une seconde entrée de commande du générateur (P') pour lui fournir une fraction de la puissance de l'émission spontanée amplifiée par l'amplificateur à gain variable (AGV1') ; un accès couplé à l'entrée (EA') de l'amplificateur à gain variable (AGV1') ; et un accès couplé à l'entrée (E') des premiers moyens de commutation (SW1') ;
et en ce que le générateur d'onde de pompage (P') fournit une puissance de pompage qui est fonction de la puissance de l'émission spontanée amplifiée qu'il reçoit sur sa seconde entrée de commande.

6. Amplificateur selon la revendication 2, caractérisé en ce que chaque amplificateur à gain fixé comporte :
- une fibre dopée (respectivement A"₁, . . ,A"ₘ) ayant une longueur distincte, et reliant une entrée des seconds moyens de commutation (SW"₂) à une sortie des premiers moyens de commutation (SW"₁) ;
- un générateur (P") d'onde de pompage, commun à tous les amplificateurs à gain fixé, et ayant : une première entrée de commande recevant le signal (G) de commande de gain ; et une sortie fournissant une onde de pompage ayant une longueur d'onde constante mais une puissance différente selon le signal (G) de commande de gain ;
- un premier coupleur (CO"₁) ayant : un accès relié à une sortie du générateur (P"), un accès couplé à la sortie (SA") de l'amplificateur à gain variable, et un accès couplé à la sortie (SC") des seconds moyens de commutation (SW"₂).

7. Amplificateur selon la revendication 6, caractérisé en ce qu'il comporte en outre un second coupleur (CO"₂) ayant : un accès relié à une seconde entrée de commande du générateur (P") pour lui fournir une fraction de la puissance de l'émission spontanée amplifiée par l'amplificateur à gain variable (AVG1") ; un accès couplé à l'entrée (EA") de l'amplificateur à gain variable (AVG1") ; et un accès couplé à l'entrée (E") des premiers moyens de commutation (SW"₁) ;
et en ce que le générateur d'onde de pompage (P") fournit une puissance de pompage qui est fonction de la puissance de l'émission spontanée amplifiée qu'il reçoit sur sa seconde entrée de commande.

8. Amplificateur selon la revendication 1, caractérisé en ce qu'il comporte en outre un étage préamplificateur commun (AO' ; AO" ; G₁) intercalé entre l'entrée (EA) de l'amplificateur à gain variable et l'entrée (E'; E" ; e) des premiers moyens de commutation.

9. Amplificateur selon la revendication 8, caractérisé en ce que l'étage préamplificateur commun (AO'; AO") comporte une fibre dopée.

10. Système de compensation automatique des variations des pertes dans une liaison optique, caractérisé en ce qu'il comporte un amplificateur à gain variable selon l'une des revendications 1 à 9, commandé par des moyens (MP, FPB, CP; MP', FR, CP') de mesure relative des pertes dans cette liaison, ces derniers moyens fournissant un signal utilisé comme signal (G) de commande de gain.

## Claims

1. Variable gain optical amplifier (AGV1; AGV2) having a given passband, its gain being adjusted by a gain control signal (G) that can take m discrete values, characterized in that it includes:
- m optical amplifiers (G₁, ..., Gₘ) each having a fixed gain different from the gains of the other amplifiers and a gain excursion as a function of wavelength at most equal to a common value in the given band;
- first switching means (SW1; CE, CA) having an input (E ; e) coupled to the input (EA) of the variable gain amplifier (AGV1; AGV2), m outputs (S₁, ..., Sₘ; s₁, ..., sₘ) respectively coupled to the inputs of the m fixed gain amplifiers (G₁, ..., Gₘ) and a control input receiving the gain control signal (G); and
- second optical switching means (SW2) having m inputs (E₁, ..., Eₘ) respectively coupled to the outputs of the m fixed gain amplifiers (G₁, ..., Gₘ), an output (SC) coupled to the output (SA) of the variable gain amplifier (AVG1) and a control input receiving the gain control signal (G).

2. Amplifier according to claim 1 characterized in that the first switching means include an optical switch (SW₁) connecting their input (E) to one only of their outputs (S₁, ..., Sₘ), this output being determined by the gain control signal (G).

3. Amplifier according to claim 1 characterized in that the first switching means include:
- a star coupler (CE) coupling the input of the variable gain amplifier to inputs of all the fixed gain amplifiers (G₁, ..., Gₘ) simultaneously; and
- means (CA) for supplying power to one only of the fixed gain amplifiers (G₁, ..., Gₘ), this amplifier being selected in accordance with the gain control signal (G).

4. Amplifier according to claim 2 characterized in that each fixed gain amplifier (G₁, ..., Gₘ) includes:
- a doped fibre (respectively A'₁, ..., A'ₘ) having a distinct length and connecting an input of the second switching means (SW'₂) to an output of the first switching means (SW'₁);
- a pump wave generator (P') common to all the fixed gain amplifiers having a first control input receiving the gain control signal (G) and an output supplying a pump wave having a constant wavelength but a different power according to the gain control signal (G); and
- a first coupler (CO'₁) having a port connected to an output of the generator (P'), a port coupled to the input (EA') of the variable gain amplifier (AVG1') and a port coupled to the input (E') of the first switching means (SW1').

5. Amplifier according to claim 4 characterized in that it further includes a second coupler (CO'₂) having a port connected to a second control input of the generator (P') to supply to it a fraction of the power of the amplified spontaneous emission of the variable gain amplifier (AGV1'), a port coupled to the input (EA') of the variable gain amplifier (AGV1') and a port coupled to the input (E') of the first switching means (SW1') and in that the pump wave generator (P') supplies a pump power that is dependent on the power of the amplified spontaneous emission that it receives on its second control input.

6. Amplifier according to claim 2 characterized in that each fixed gain amplifier includes:
- a doped fibre (respectively A"₁, ..., A"ₘ) having a distinct length and connecting an input of the second switching means (SW"₂) to an output of the first switching means (SW"₁);
- a pump wave generator (P") common to all the fixed gain amplifiers and having a first control input receiving the gain control signal (G) and an output supplying a pump wave having a constant wavelength but a different power according to the gain control signal (G); and
- a first coupler (CO"₁) having a port connected to an output of the generator (P"), a port coupled to the output (SA") of the variable gain amplifier and a port coupled to the output (SC") of the second switching means (SW"₂).

7. Amplifier according to claim 6 characterized in that it further includes a second coupler (CO"₂) having a port connected to a second control input of the generator (P") to supply to it a fraction of the power of the amplified spontaneous emission of the variable gain amplifier (AVG1"), a port coupled to the input (EA") of the variable gain amplifier (AVG1") and a port coupled to the input (E") of the first switching means (SW"₁) and in that the pump wave generator (P") supplies a pump power that is dependent on the power of the amplified spontaneous emission that it receives at its second control input.

8. Amplifier according to claim 1 characterized in that it further includes a common pre-amplifier stage (AO'; AO"; G₀) between the input (EA) of the variable gain amplifier and the input (E'; E"; e) of the first switching means.

9. Amplifier according to claim 8 characterized in that the common pre-amplifier stage (AO'; AO") includes a doped fibre.

10. System for automatically compensating variations in the losses on an optical link characterized in that it includes a variable gain amplifier according to any one of claims 1 through 9 controlled by means (MP, FPB, CP; MP', FR, CP') for relative measurement of the losses on the link, the latter means supplying a signal used as the gain control signal (G).

## Patentansprüche

1. Optischer Verstärker mit variabler Verstärkung (AGV1; AGV2) und einem gegebenen Durchgangsband, dessen Verstärkung durch ein Verstärkungssteuersignal (G) geregelt ist, das m diskrete werte annehmen kann,
dadurch gekennzeichnet, daß er umfaßt:
- m optische Verstärker (G₁, ..., Gₘ), die jeweils eine festgelegte und von den Verstärkungen der anderen Verstärker verschiedene Verstärkung haben, und die einen Verstärkungshub als Funktion der Wellenlänge haben, der höchstens gleich einem gemeinsamen Wert in dem gegebenen Band ist;
- erste Schaltmittel (SW1; CE, CA) mit: einem Eingang (E; e), der an den Eingang (EA) des Verstärkers mit variabler Verstärkung (AGV1; AGV2) gekoppelt ist, m Ausgängen (S₁, ..., Sₘ; s₁, ..., sₘ), die jeweils an die Eingänge der m Verstärker mit festgelegter Verstärkung (G₁, ..., Gₘ) gekoppelt sind, und einem Steuereingang, der das Verstärkungssteuersignal empfängt; und
- zweite optische Schaltmittel (SW2) mit m Eingängen (E₁, ..., Eₘ), die jeweils an die Ausgänge der m Verstärker mit festgelegten Verstärkungen (G₁, ..., Gₘ) gekoppelt sind, einem Ausgang (SC), der an den Ausgang (SA) des Verstärkers mit variabler Verstärkung (AGV1) gekoppelt ist, und einem Steuereingang, der das Verstärkungssteuersignal (G) empfängt.

2. Verstärker nach Anspruch 1, dadurch gekennzeichnet, daß die ersten Schaltmittel einen optischen Schalter (SW₁) umfassen, der ihren Eingang (E) mit einem einzigen ihrer Ausgänge (S₁, ..., Sₘ) verbindet, wobei dieser Ausgang durch das Verstärkungssteuersignal (G) bestimmt ist.

3. Verstärker nach Anspruch 1, dadurch gekennzeichnet,
daß die ersten Schaltmittel umfassen:
- einen Sternkoppler (CE), der den Eingang des Verstärkers mit variabler Verstärkung an Eingänge aller Verstärker mit festgelegten Verstärkungen (G₁, ..., Gₘ) gleichzeitig koppelt; und
- Mittel (CA) zum Versorgen nur eines der Verstärker mit festgelegten Verstärkungen (G₁, ..., Gₘ) mit Energie, wobei dieser Verstärker in Funktion des Verstärkungssteuersignals (G) gewählt ist.

4. Verstärker nach Anspruch 2, dadurch gekennzeichnet,
daß jeder Verstärker mit festgelegter Verstärkung (G₁, ..., Gₘ) umfaßt:
- eine dotierte Faser (jeweils A'₁, ..., A'ₘ) mit einer unterschiedlichen Länge, die einen Eingang der zweiten Schaltmittel (SW'₂) mit einem Ausgang der ersten Schaltmittel (SW'₁) verbindet;
- einen Pumpwellenerzeuger (P') der allen Verstärkern mit festgelegten Verstärkungen gemeinsam ist und einen ersten Steuereingang, der das Verstärkungssteuersignal (G) empfängt, und einen Ausgang hat, der eine Pumpwelle liefert, die eine konstante Wellenlänge aber eine je nach Verstärkungssteuersignal (G) unterschiedliche Leistung hat;
- einen ersten Koppler (CO'₁) mit: einem an einen Ausgang des Erzeugers (P') angeschlossenen Zugang, einem an den Eingang (EA') des Verstärkers mit variabler Verstärkung (AVG1') gekoppelten Zugang und einem an den Eingang (E') der ersten Schaltmittel (SW₁') gekoppelten Zugang.

5. Verstärker nach Anspruch 4, dadurch gekennzeichnet,
daß er ferner einen zweiten Koppler (CO'₂) umfaßt, mit: einem Zugang, der an einen zweiten steuereingang des Erzeugers (P') angeschlossen ist, um ihm einen Bruchteil der vom Verstärker mit variabler Verstärkung (AVG1') verstärkten spontanen Emission zuzuführen; einem Zugang, der an den Eingang (EA') des Verstärkers mit variabler Verstärkung (AVG1') gekoppelt ist; und einem Zugang, der an den Eingang (E') der ersten Schaltmittel (SW1') gekoppelt ist;
und daß der Pumpwellenerzeuger (P') eine Pumpleistung liefert, die eine Funktion der Leistung der verstärkten spontanen Emission ist, die er an seinem zweiten Steuereingang empfängt.

6. Verstärker nach Anspruch 2, dadurch gekennzeichnet,
daß jeder Verstärker mit festgelegter Verstärkung umfaßt:
- eine dotierte Faser (jeweils A"₁, ..., A"ₘ) mit einer unterschiedlichen Länge, die einen Eingang der zweiten Schaltmittel (SW"₂) mit einem Ausgang der ersten Schaltmittel (SW"₁) verbindet;
- einen Pumpwellenerzeuger (P") der allen Verstärkern mit festgelegter Verstärkung gemeinsam ist und einen ersten Steuereingang, der das Verstärkungssteuersignal (G) empfängt, und einen Ausgang hat, der eine Pumpwelle liefert, die eine konstante Wellenlänge aber eine je nach Verstärkungssteuersignal (G) unterschiedliche Leistung hat;
- einen ersten Koppler (CO"₁) mit: einem an einen Ausgang des Erzeugers (P") angeschlossenen Zugang, einem an den Ausgang (SA") des Verstärkers mit variabler Verstärkung gekoppelten Zugang und einem an den Ausgang (SC") der zweiten Schaltmittel (SW"₂) gekoppelten Zugang.

7. Verstärker nach Anspruch 6, dadurch gekennzeichnet,
daß er ferner einen zweiten Koppler (CO"₂) umfaßt, mit: einem Zugang, der an einen zweiten Steuereingang des Erzeugers (P") angeschlossen ist, um ihm einen Bruchteil der vom Verstärker mit variabler Verstärkung (AVG1") verstärkten spontanen Emission zuzuführen; einem Zugang, der an den Eingang (EA") des Verstärkers mit variabler Verstärkung (AVG1") gekoppelt ist; und einem Zugang, der an den Eingang (E") der ersten Schaltmittel (SW"₁) gekoppelt ist;
und daß der Pumpwellenerzeuger (P") eine Pumpleistung liefert, die eine Funktion der Leistung der verstärkten spontanen Emission ist, die er an seinem zweiten Steuereingang empfängt.

8. Verstärker nach Anspruch 1, dadurch gekennzeichnet,
daß er ferner eine gemeinsame Vorverstärkerstufe (AO', AO", G₀) umfaßt, die zwischen den Eingang (EA) des Verstärkers mit variabler Verstärkung und den Eingang (E', E", e) der ersten Schaltmittel eingefügt ist.

9. Verstärker nach Anspruch 8, dadurch gekennzeichnet,
daß die gemeinsame Vorverstärkerstufe (AO', AO") eine dotierte Faser umfaßt.

10. System zur automatischen Kompensation von Verluständerungen in einer optischen Verbindung,
dadurch gekennzeichnet, daß es einen Verstärker mit variabler Verstärkung nach einem der Ansprüche 1 bis 9 umfaßt, gesteuert durch Mittel (MP, FPB, CP; MP', PR, CP') zur relativen Messung der Verluste auf dieser Verbindung, wobei letztere Mittel ein Signal liefern, das als Verstärkungssteuersignal (G) genutzt wird.
